**Europäisches Patentamt**

**European Patent Office**

**Office européen des brevets**

(19)

(11) Publication number: **0 386 323**
**A1**

(12) # EUROPEAN PATENT APPLICATION

(21) Application number: **89121620.2**

(51) Int. Cl.5: **A23G 9/22**

(22) Date of filing: **23.11.89**

The title of the invention has been amended (Guidelines for Examination in the EPO, A-III, 7.3).

(30) Priority: **07.03.89 IT 1244689**

(43) Date of publication of application:
**12.09.90 Bulletin 90/37**

(84) Designated Contracting States:
**AT BE CH DE ES FR GB GR LI LU NL SE**

(71) Applicant: **Carpigiani S.r.L.**
**45, Via Emilia**
**I-40011 Anzola Emilia, Bologna(IT)**

(72) Inventor: **Manfroni, Ezio**
**56, Via Altopiano**
**I-40037 Sasso Marconi (BO)(IT)**

(74) Representative: **Porsia, Attilio et al**
**c/o Succ. Ing. Fischetti & Weber-Dr. Porsia**
**Via Caffaro 3/2**
**I-16124 Genova(IT)**

(54) **Scraper device for ice cream machines.**

(57) The invention relates to a stirrer, particularly for ice cream making machines, which is designed to be rotated in the interior of a substantially cylindrical container, so-called freezing cylinder or chamber, co-axially with the central axis of said container, said stirrer being provided with a plurality of paddles (1) co-operating with the inner surface (S) of said container. According to the invention, each paddle is provided, on its side co-operating with the inner surface (S) of said freezing chamber, with one or more scraping members (8) each of which is urged against said inner surface (S) of the freezing chamber by means of resilient compression members (12).

Fig.3

Fig.1

EP 0 386 323 A1

The invention relates to a stirrer, particularly for ice cream making machines, which is designed to be rotated in the interior of a substantially cylindrical container, so-called freezing cylinder or chamber, about the central axis of said container, and which is provided with a plurality of paddles co-operating with the inner surface of said container.

The object of the invention is to provide a stirrer of the type described above which, with a simple and inexpensive construction, permits to achieve an improved thermal exchange between the cold surface of the freezing chamber and the product in the various stages thereof, while avoiding at the same time any stagnation of the product at the zone subjected to a reduced centrifugation action.

The invention achieves this object by means of a stirrer of the type described in the preamble, wherein each paddle is provided, on its side co-operating with the inner surface of the freezing container, with one or more scraping members, each of which is pushed against said inner surface of the freezing cylinder by means of resilient compression members.

Thanks to this construction, in the stirrer according to the invention the scraping members always engage perfectly against the inner surface of the freezing chamber, yet without hindering the rotation of said stirrer. By this arrangement, during the freezing step, the product being worked is removed completely from the inner surface of the freezing chamber, so as to avoid the stagnation of a layer of product and, therefore, improve the spreading of product over said cold surface, whereby the thermal exchange between the total mass of the product and the cold surfaces of the freezing chamber is greatly improved. Moreover, thanks to said resilient compression members which always push said scraping members with a constant force against the inner surface of the freezing chamber, said removal action will be maintained, even in case of considerable wear of said paddles.

In order to cover the whole longitudinal extent of the freezing chamber, in the stirrer according to the invention the individual scraping members may be arranged substantially parallel to the edge of said paddles, successively along an imaginary helical line extending along the internal substantially cylindrical surface of said freezing chamber. Therefore, each scraping member co-operates with a strip of said inner surface that is different from the strips co-operating with the others.

Said scraping members may be mounted on the associated paddles removably, thus facilitating the cleaning of said stirrer and - particularly when the paddles are equally spaced angularly from each other - they impart said stirrer an automatic centering effect with respect to the freezing chamber.

According to a further advantageous characteristic of the stirrer according to the invention, said paddles are constructed as helical fins, particularly having a long pitch, and they are arranged radially and are equally spaced apart angularly, while being connected to each other only at the upper and lower ends thereof by means of a hub provided with radial arms. In this instance, at the paddle area, there is no central supporting shaft at all, unlike the known stirrers. In addition to save material and to ease cleaning, the stirrer according to this embodiment has the important advantage of not hindering the movements inherent to the freezing step or the movements during the removal of the product, and of preventing any stagnation of the product at the central region thereof, which is the region of minimum centrifugal action, whereby said product will be more homogeneous.

The invention also relates to other characteristics which further improve said stirrer and which are the sucject matter of the sub-claims.

The particular characteristics of the invention and the advantages resulting therefrom will become apparent with more details from the description of a preferred embodiment thereof, shown as a non-limiting example in the accompanying drawings, wherein:

Figure 1 is a side elevational view of the stirrer according to the invention.

Figure 2 is a view in the axial direction of the stirrer of Figure 1.

Figure 3 is an enlarged view of a scraping member for the stirrer according to Figure 1.

Figure 4 shows an enlarged detail of the scraping member of Figure 1 in an assembled condition.

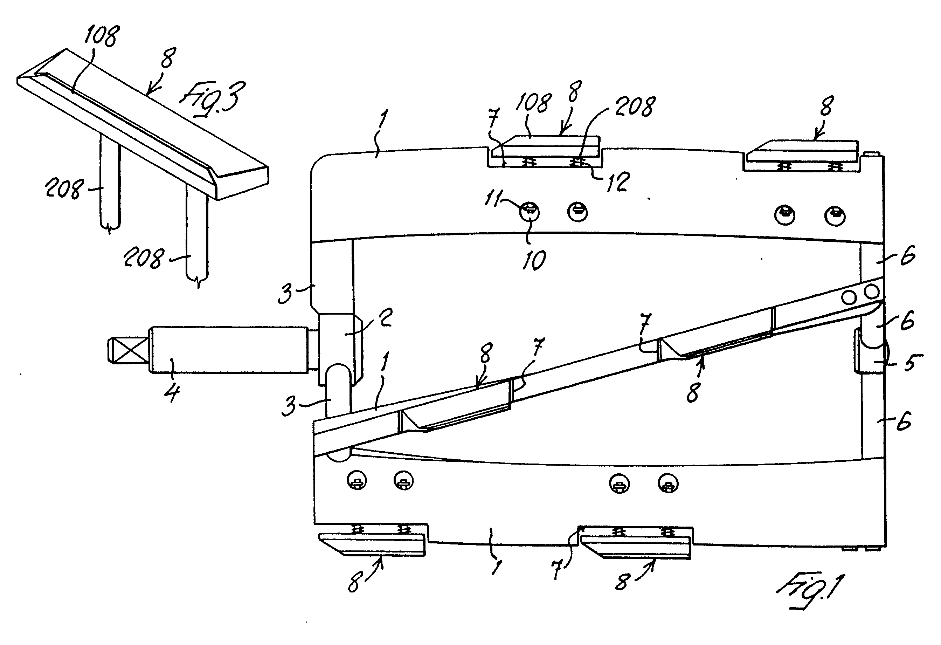

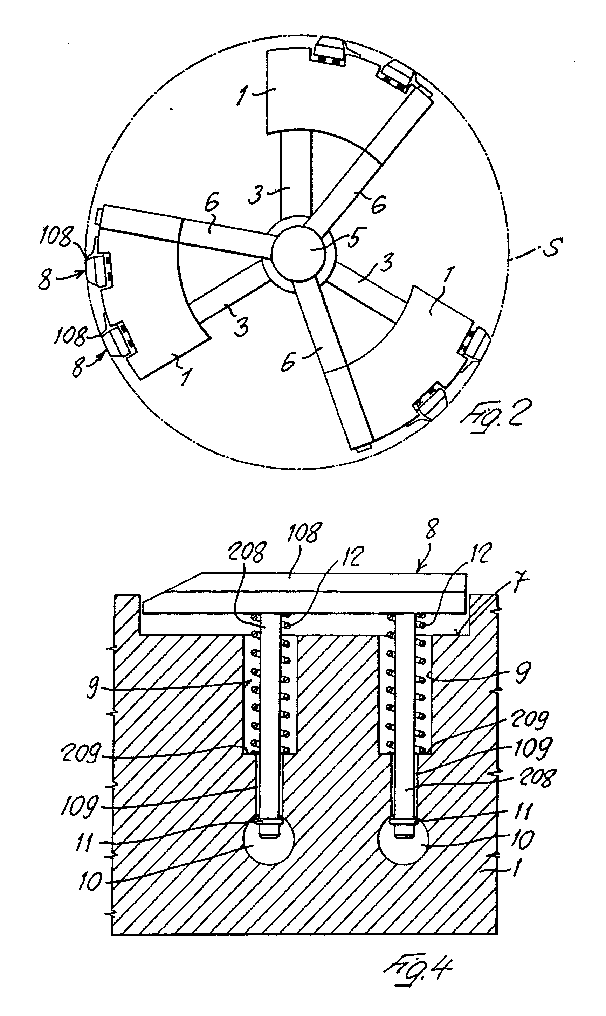

The stirrer of Figure 1 is designed to be rotated co-axially with the central axis of a cylindrical container, so-called freezing cylinder or chamber (not shown), and in the interior thereof. In Figure 2, the circular dot-and-dash line corresponds to the cross section of the inner surface of the freezing cylinder. The stirrer consists of three paddles 1 constructed, in particular, with a long-pitch helical configuration and directed radially with respect to the central axis of the freezing cylinder. Said paddles are arranged equally spaced apart angularly and are connected to each other at their ends, respectively, by means of a hub 2 having three radial arms 3 and having co-axially secured thereto a shaft section 4? and of a similar hub 5 co-axial with the hub 2 and also provided with three radial arms 6.

Each paddle 1 is provided, on the edge thereof opposite the inner surface S of the freezing cylinder (not shown), with two radial undercuts 7 at different location in the paddle and which constitute the housing for said scraping members 8.

As shown in Figure 3, the scraping members 8 consist of a small plate which is provided, at the side co-operating with the surface S of said freezing cylinder, with a radial ridge 108 extending substantially over the entire length of said plate, while an end portion of said plate is tapered towards the central axis, specifically, the end which is directed towards the side of the stirrer that is introduced first into the freezing cylinder, which in this instance is the side associated with the hub 2 having the shaft section 4. Therefore, the introduction of the stirrer into the freezing chamber is considerably facilitated thanks to said tapered sloping surfaces of the scraping members and is not hindered at all. In the scraping member 8 of this embodiment, moreover, the ridge 108 is at an angle to the radial direction in order to further enhance its rubbing or scraping action and its product-collecting action along the walls of the freezing chamber. At the side directed towards the paddle associated therewith, each plate is provided with two stems 208 which, as shown in detail in Figure 4, are used to removably mount the scraping member 8 to the paddles.

For this purpose, two radial holes 9 are formed at said undercut 7 to accommodate said mounting stems 208 of the scraping member. The holes 9 are extended radially towards the central axis through a restriction 109, and each of them opens into a slot 10 in the paddle. Said mounting stems 208 extend into said slot 10 and are provided, in the end portion associated therewith, with an annular groove whereby they can be secured in any manner, particularly by means of an O-ring 11, preferably of a resilient material, e.g. rubber, the diameter of which is larger than that of the restriction 109 of the holes 9. In addition, interposed between the side of the scraping member facing the associated paddle and the annular shoulder 209 of the restriction 109 is a spring 12 which is threaded on each stem 208 and urges the scraping member 8 radially outwards against the surface S of the freezing chamber, whereby the scraping members 8 protrude radially from the surface of the paddles 1 that is directed towards the inner surface of the freezing chamber. This condition is clearly shown in Figure 2.

Therefore, the scraping members 8, besides being secured on the respective paddles so as to be easily removable therefrom, are always urged with a constant force against the inner surface S of the freezing chamber, and they always rub thereagainst perfectly. Therefore, the product adhered to said surface S is always removed quite positively, in particular, even when the scraping members 8 are considerably worn. By this arrangement, the thermal transfer between the wall of the freezing chamber and the product is always maintained at its maximum level.

The scraping members 8 according to the invention perform as well a centering action for the stirrer within the freezing chamber and they allow for possible shapes of the freezing chamber deviating from a perfectly cylindrical outline.

As appearing particularly from Figure 1, the individual paddles 1 comprise specifically, each, a pair of scraping members 8 which are mounted at different regions of the axial extent of the stirrer, in particular along an imaginary helical line extending along the inner surface S of the freezing chamber. By this arrangement, the entire axial extent of the freezing chamber can be covered by means of a comparatively small number of scraping members 8 during the rotation of the stirrer, so as to eliminate therefrom the residues of the product completely.

The absence of a central shaft at the region of the paddles 1, in addition, eliminates any stagnation of the product at this region by facilitating the centrifugal action, whereby the product will be considerably homogeneous.

Of course, the invention is not limited to the embodiment just described and illustrated, but broad changes and modifications, especially of constructional nature, may be made thereto. The scraping members, in fact, may also be provided in other types of stirrers to be used either for the same purposes and in different fields, and they may either have different shapes and be mounted in any different manner. In effect, even a single scraping member may be mounted on each paddle and, in this instance, it may extend even over the entire length of said paddle. All the above without departing from the basic principle set forth above and claimed hereinafter.

## Claims

1. A stirrer, particularly for ice cream making machines, which is designed to be rotated in the interior of a substantially cylindrical container, so-called freezing cylinder or chamber, co-axially with the central axis of said container, said stirrer being provided with a plurality of paddles (1) co-operating with the inner surface of said container, characterized in that each paddle (1) is provided, on its side co-operating with the inner surface (S) of the freezing container, with one or more scraping members (8) each of which is pushed against said inner surface (S) of the freezing cylinder by means of resilient compression members (12).

2. A stirrer according to claim 1, characterized in that said scraping members (8) consist of small plates arranged either substantially in the longitudinal direction of the stirrer or partially at an angle, which on the side thereof facing the inner surface (S) of the freezing chamber comprise a ridge (108) protruding radially outwards or slightly inclined which is designed to rub against said inner surface (S).

3. A stirrer according to claims 1 or 2, characterized in that said scraping members (8) are tapered radially towards the central axis at the ends thereof associated with the end of the stirrer which is introduced first into the freezing container.

4. A stirrer according to one or more of the preceding claims, characterized in that said scraping members (8) are removably secured to the paddles (1), and they are aligned with their longitudinal edge facing towards the inner surface (S) of the freezing chamber, and said resilient compression members consist of springs (12).

5. A stirrer according to one or more of the preceding claims, characterized in that said paddles (1) have a long-pitch helical shape and said scraping members (8) are accommodated in radial undercuts (7) formed in the side thereof that is facing the inner surface of said freezing chamber.

6. A stirrer according to one or more of the preceding claims, characterized in that said scraping members (8) are provided, on the side thereof facing the respective paddle (1), with two fastening pins or stems (208) to be accommodated within corresponding radial holes (9) of the respective undercut, each said holes opening into a slot (10) of the paddle (1), and the free ends of said stems (208) provided with removable locking means (11) protrude into said slots (10), and between the surface of each scraping member (8) facing towards the associated paddle (1) and an inner shoulder (209) of each hole (9) there is interposed a helical spring (12) as a resilient compression member.

7. A stirrer according to claim 6, characterized in that said removable locking means (11) for the stems (208) consist of an O-ring of resilient material, preferably of rubber, having a diameter larger than the respective hole (9), said O-ring being engageable in an annular groove provided in the free end portion of each stem (208) which protrudes into the slot (10) of said paddle (1).

8. A stirrer according to one or more of the preceding claims, characterized in that said scraping members (8) are in a staggered arrangement in the direction of the longitudinal axis of the stirrer, i.e. of the freezing chamber, particularly in a succession along an imaginary helical line extending on the inner surface (S) of the freezing chamber, each scraping member (8) co-operating with a strip of said inner surface other than those which are associated with the other scraping members (8) and so that the assembly of scraping members (8) will cover the entire inner surface (S) of said freezing chamber.

9. A stirrer according to one or more of the preceding claims, characterized in that said paddles (1) are connected to each other only at their longitudinal ends, respectively, by means of a hub (2) provided, for each paddle (1), with a radial arm (3) having co-axially secured thereto a drive shaft section (4), and of a hub (5) also provided with a radial arm (6) for each paddle, said two hubs (2,5) being connected to each other only by means of said paddles.

Fig.3

Fig.1

EP 0 386 323 A1

Fig. 2

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 035 420 (C.R. STOELTING et al.) * Figures 1,2,3; column 1, line 61 - column 3, line 11 * | 1,2,3,4 ,5,6,8 | A 23 G 9/22 |
| X | US-A-2 506 101 (H.M. OLTZ) * Column 4, lines 30-58; figures 1,8 * | 1,2,3,4 | |
| A | FR-A-2 472 347 (G. BONZAGNI) * Figure 1; claim 1 * | 1,2,9 | |
| A | FR-A-2 216 011 (FRIGOMAT) | | |
| A | DE-A-2 925 232 (HAAGEN et al.) | | |
| A | DE-A-2 222 703 (D. LEWINSKY) | | |
| A | FR-A-2 218 133 (A. BOMBARDIERI) | | |
| A | US-A-2 188 551 (C. KALTENBACH et al.) | | |
| A | US-A-3 061 281 (L.A.M. PHELAN et al.) | | TECHNICAL FIELDS SEARCHED (Int. Cl.5) |
| A | US-A-2 576 995 (T. CARVEL) | | A 23 G 9/22 |

The present search report has been drawn up for all claims

| Place of search | Date of completion of the search | Examiner |
|---|---|---|
| THE HAGUE | 05-03-1990 | GUYON R.H. |